# EUROPEAN PATENT APPLICATION

(11) **EP 4 322 132 A1**
(43) Date of publication of application: **14.02.2024**
(21) Application number: 22210164.4
(22) Date of filing: 29.11.2022
(51) Int. Cl.: G08G 1/14, G08G 1/0967, B60W 60/00, G05D 1/02, H04W 4/02, G06Q 10/06

(54) **PARKING METHOD, STORAGE MEDIUM, CHIP AND VEHICLE**

(30) Priority: 11.08.2022 CN 202210964336
(71) Applicant: Xiaomi EV Technology Co., Ltd., 100176 Beijing (CN)
(72) Inventor: ZHOU, Can, Beijing, 100176 (CN)
(74) Representative: dompatent von Kreisler Selting Werner - Partnerschaft von Patent- und Rechtsanwälten mbB

(57) **Abstract**

The present disclosure relates to a parking method, a storage medium, a chip and a vehicle. According to the parking method, in response to determining that a distance between the vehicle and a designated parking lot is less than a preset distance threshold, free parking spaces of the designated parking lot are obtained (102;301) in advance, and a recommended target parking space is determined (103) according to position information of each free parking space; and target parking prompt information is generated (104) according to the recommended target parking space, the target parking prompt information is sent to a designated terminal, and in response to receiving a valet parking allowing instruction sent by the designated terminal, the valet parking allowing instruction is forwarded (105) to the target vehicle to control the target vehicle to drive to the recommended target parking space.

## Description

### TECHNICAL FIELD

The present disclosure relates to the field of automatic driving, and especially relates to a parking method, a storage medium, a chip and a vehicle.

### BACKGROUND ART

At present, the difficulty of parking and the time and effort required for parking have become a serious social problem, especially in the case of parking in large supermarkets or department stores, a lot of energy is required.

### BRIEF SUMMARY OF THE INVENTION

In order to overcome the problems existing in the related art, the present disclosure provides a parking method, a storage medium, a chip and a vehicle.

According to a first aspect of the present disclosure, a parking method is provided and performed by a target server, and includes:
obtaining a current position of a target vehicle;
in response to determining that a distance between the target vehicle and a designated parking lot is less than a preset distance threshold according to the current position, and that the designated parking lot is provided with free parking spaces, obtaining position information of the free parking spaces in the designated parking lot;
determining a recommended target parking space according to the position information of each free parking space;
generating target parking prompt information according to the recommended target parking space, sending the target parking prompt information to a designated terminal which is used for displaying the target parking prompt information, and in response to target operation of a user, triggering a valet parking allowing instruction which is used for representing that a valet parking function is allowed to be started; and
in response to receiving the valet parking allowing instruction sent by the designated terminal, forwarding the valet parking allowing instruction to the target vehicle to control the target vehicle to drive to the target recommended parking space in response to receiving the valet parking allowing instruction.

Optionally, determining a recommended target parking space according to the position information of each free parking space includes:
obtaining preset parking position preference information which includes parking areas nearest to an exit and/or preset preferred parking areas; and
determining the recommended target parking space from at least one free parking space of the designated parking lot according to the parking position preference information and position feature information of each free parking space.

Optionally, determining a recommended target parking space according to the position information of each free parking space includes:
obtaining historical parking information of the user in the designated parking lot, and the historical parking information including a designated position of each historical parking space and use times of each historical parking space; and
determining the recommended target parking space from at least one free parking space according to the use times and the designated position of each historical parking space.

Optionally, determining the recommended target parking space from at least one free parking space according to the use times and the designated position of each historical parking space includes:
determining historical target parking spaces with use times which are greater than a preset times threshold;
in response to determining that the at least one free parking space includes one historical target parking space, taking the historical target parking space as the target recommended parking space; and
in response to determining that the at least one free parking space includes a plurality of the historical target parking spaces, taking the historical target parking space with the highest use times as the target recommended parking space.

Optionally, determining the recommended target parking space from at least one free parking space according to the use times and the designated position of each historical parking space includes:
in response to determining that the at least one free parking space does not include the historical target parking spaces, obtaining a free target parking space nearest to the designated position of a designated historical parking space; and taking the free target parking space as the recommended target parking space, and the designated historical parking space being the historical target parking space with the highest use times.

Optionally, generating target parking prompt information according to the recommended target parking space includes:
in response to determining that a plurality of the recommended target parking spaces are existent, generating target parking prompt information including a corresponding option of each recommended target parking space; and
in response to receiving a valet parking allowing instruction sent by the designated terminal, forwarding the valet parking allowing instruction to the target vehicle includes:
   in response to receiving a valet parking allowing instruction including the recommended target parking space designated by the user, forwarding the valet parking allowing instruction to the target vehicle.

Optionally, the free parking spaces include first parking spaces with charging piles and second parking spaces without charging piles, and before determining a recommended target parking space according to position information of each free parking space, the method further includes:
obtaining a current state of charge of the target vehicle; and
determining a recommended target parking space according to the position information of each free parking space includes:
   in response to determining that the state of charge is less than or equal to a preset electric quantity threshold, and free first parking spaces are existent, determining the recommended target parking space from the free first parking spaces.

Optionally, determining a recommended target parking space according to the position information of each free parking space includes:
in response to the free first parking spaces being non-existent, obtaining corresponding estimated vacating time of each first parking space in the designated parking lot, and the estimated vacating time being used for representing estimated charging completion time of a designated charging vehicle;
taking the first parking space with the earliest estimated vacating time as a recommended parking space to be determined;
determining a target second parking space nearest to the recommended parking space to be determined; and
taking the target second parking space as the target recommended parking space.

Optionally, the method further includes:
in response to determining that charging for the designated charging vehicle in the recommended parking space to be determined is completed, sending a charging moving instruction to the target vehicle to enable the target vehicle to drive to the recommended parking space to be determined for charging in response to receiving the charging moving command, and sending position information of the target second parking space to the designated charging vehicle to enable the designated charging vehicle to move to the target second parking space.

Optionally, the method further includes:
in response to determining that parking of the target vehicle is completed, sending parking completion information to the designated terminal, and the parking completion information including a parking space identification of the parking space and image information within a preset range around the parking space.

Optionally, the method further includes:
in response to receiving a vehicle picking instruction including a getting-in position, which is triggered by the designated terminal, forwarding the vehicle picking instruction to the target vehicle to enable the target vehicle to drive out of the designated parking lot to the getting-in position in response to receiving the vehicle picking instruction.

According to a second aspect of the present disclosure, a parking apparatus is provided and performed by a target server, and includes:
a first obtaining module, configured to obtain a current position of a target vehicle;
a first determination module, configured to obtain position information of the free parking spaces in the designated parking lot, in response to determining that a distance between the target vehicle and a designated parking lot is less than a preset distance threshold according to the current position, and the designated parking lot is provided with free parking spaces,;
a second determination module, configured to determine a recommended target parking space according to position information of each free parking space;
a first sending module, configured to generate target parking prompt information according to the recommended target parking space, send the target parking prompt information to a designated terminal which is used for displaying the target parking prompt information, and in response to target operation of a user, trigger a valet parking allowing instruction which is used for representing that a valet parking function is allowed to be started; and
a second sending module, configured to forward, in response to receiving the valet parking allowing instruction sent by the designated terminal, the valet parking allowing instruction to the target vehicle to control the target vehicle to drive to the recommended target parking space in response to receiving the valet parking allowing instruction.

Optionally, the second determination module is configured to:
obtain preset parking position preference information which includes parking areas nearest to an exit and/or preset preferred parking areas; and
determine the recommended target parking space from at least one free parking space of the designated parking lot according to the parking position preference information and position feature information of each free parking space.

Optionally, the second determination module is configured to:
obtain historical parking information of the user in the designated parking lot, and the historical parking information including a designated position of each historical parking space and use times of each historical parking space; and
determine the recommended target parking space from at least one free parking space according to the use times and the designated position of each historical parking space.

Optionally, the second determination module is configured to:
determine historical target parking spaces with use times which are greater than a preset times threshold;
in response to determining that the at least one free parking space includes one historical target parking space, take the historical target parking space as the recommended target parking space; and
in response to determining that the at least one free parking space includes a plurality of the historical target parking spaces, take the historical target parking space with the highest use times as the recommended target parking space.

Optionally, the second determination module is configured to:
in response to determining that the at least one free parking space does not include the historical target parking spaces, obtain a free target parking space nearest to the designated position of a designated historical parking space; and take the free target parking space as the recommended target parking space, and the designated historical parking space being the historical target parking space with the highest use times.

Optionally, the first sending module is configured to:
in response to determining that a plurality of the recommended target parking spaces are existent, generate target parking prompt information including a corresponding option of each recommended target parking space; and
the second sending module is configured to:
   in response to receiving a valet parking allowing instruction including the recommended target parking space designated by the user, forward the valet parking allowing instruction to the target vehicle.

Optionally, the free parking spaces include first parking spaces with charging piles and second parking spaces without the charging piles, and the apparatus further includes:
a second obtaining module, configured to obtain a current state of charge of the target vehicle; and
the second determination module is configured to:
   in response to determining that the state of charge is less than or equal to a preset electric quantity threshold, and free first parking spaces are existent, determine the recommended target parking space from the free first parking spaces.

Optionally, the second determination module is configured to:
in response to determining that the free first parking spaces are non-existent, obtain corresponding estimated vacating time of each first parking space in the designated parking lot, and the estimated vacating time is used for representing estimated charging completion time of a designated charging vehicle;
take the first parking space with the earliest estimated vacating time as a recommended parking space to be determined;
determine a target second parking space nearest to the recommended parking space to be determined; and
take the target second parking space as the recommended target parking space.

Optionally, the apparatus further includes:
a third sending module, configured to send, in response to determining that charging for the designated charging vehicle in the recommended parking space to be determined is completed, a charging moving instruction to the target vehicle to enable the target vehicle to drive to the recommended parking space to be determined for charging in response to receiving the charging moving command, and send position information of the target second parking space to the designated charging vehicle to enable the designated charging vehicle to move to the target second parking space.

Optionally, the apparatus further includes:
a fourth sending module, configured to send, in response to determining that parking of the target vehicle is completed, parking completion information to the designated terminal, and the parking completion information include a parking space identification of the parking space and image information within a preset range around the parking space.

Optionally, the apparatus further includes:
a fifth sending module, configured to forward, in response to receiving a vehicle picking instruction including a getting-in position, which is triggered by the designated terminal, the vehicle picking instruction to the target vehicle to enable the target vehicle to drive out of the designated parking lot to the getting-in position in response to receiving the vehicle picking instruction.

According to a third aspect of the present disclosure, a vehicle is provided, and includes:
a processor; and
a memory for storing a processor executable instruction;
the processor is configured to: execute the steps of the method according to the first aspect of the disclosure.

According to a fourth aspect of the present disclosure, a non-transitory computer-readable storage medium is provided, in which computer program instructions are stored, and the steps of the method according to the first aspect of the disclosure are realized when the program instructions are executed by the processor.

According to a fifth aspect of the present disclosure, a chip is provided, and includes a processor and an interface; and the processor is used for reading instructions to execute the steps of the method according to the first aspect of the invention.

The technical solutions provided by the examples of the disclosure include the following beneficial effects:
in response to determining that a distance between the target vehicle and a designated parking lot is less than a preset distance threshold, free parking spaces of the designated parking lot can be obtained in advance, and a recommended target parking space is determined according to position information of each free parking space; and target parking prompt information is generated according to the recommended target parking space, the target parking prompt information is sent to a designated terminal, and in response to receiving a valet parking allowing instruction sent by the designated terminal, the valet parking allowing instruction is forwarded to the target vehicle to control the target vehicle to drive to the recommended target parking space. In this way, a user can be replaced to search for the free parking spaces, the corresponding recommended target parking space can be provided for the user, after the recommended target parking space is determined, a valet parking function can be started in response to receiving the valet parking allowing instruction sent by the designated terminal, and then automatic parking to the recommended target parking space is realized, so that the automation degree of parking can be effectively increased, the efficiency of automatic parking can be increased, and the parking experience of the user can be improved.

It shall be understood that the above general description and the following detailed description are only exemplary and explanatory, and cannot limit the disclosure.

### BRIEF DESCRIPTION OF THE FIGURES

The drawings here are incorporated into the specification and constitute a part of the specification, show the examples consistent with the present disclosure, and are used for explaining the principle of the present disclosure together with the specification.
Fig. 1 is a flow diagram of a parking method shown in an example of the present disclosure;
Fig. 2 is a flow diagram of a parking method shown according to the example shown in Fig. 1 of the present disclosure;
Fig. 3 is a flow diagram of a parking method shown in another example of the present disclosure;
Fig. 4 is a schematic diagram of a parking scene shown in an example of the present disclosure;
Fig. 5 is a block diagram of a parking apparatus shown in an example of the present disclosure;
Fig. 6 is a block diagram of a parking apparatus according to the example shown in Fig. 5 of the present disclosure;
Fig. 7 is a block diagram of a vehicle shown according to an example; and
Fig. 8 is a block diagram of an apparatus for parking, which is shown according to an example.

### DETAILED DESCRIPTION OF EMBODIMENTS

Exemplary embodiments will be described in detail here, and examples thereof are shown in the accompanying drawings. When the following descriptions refer to the drawings, the same numbers in different drawings indicate the same or similar elements, unless otherwise indicated. The implementation manners described in the following exemplary examples do not represent all implementation manners consistent with the disclosure. Instead, the implementation manners are merely examples of apparatuses and methods consistent with some aspects of the present disclosure described as detailed in the appended claims.

It should be noted that all actions for acquiring signals, information or data in the application are carried out on the premise of complying with the corresponding data protection regulations and policies of the country where the application is located, and with the authorization of the corresponding apparatus owner.

At present, difficulty in parking and much time and energy required for parking have become a serious social problem, especially in the case of parking in large supermarkets or department stores, a lot of energy is required. Although present automatic parking solutions can improve the problem of difficulty in parking of users to a certain extent, there is still a low automation degree and low parking efficiency, and the key problem that the users spend too much time for parking cannot be effectively and thoroughly solved.

Before the specific implementation manners of the present disclosure are described in detail, first of all, the application scene of the present disclosure is described as follows, and the present disclosure may be applied to an automatic parking scene; at present, the automatic parking solutions in the related arts usually rely on auxiliary driving domain controllers, cameras, ultrasonic radars and other hardware to search first and then park, in a driving process of a user, an auxiliary driving system searches for parking spaces, after the user selects the parking space, the auxiliary driving system parks into the parking space, the automatic parking solutions require the user to drive into a parking lot and manually select the target parking space; or the automatic parking solutions in the related arts rely on the auxiliary driving domain controllers, cameras, ultrasonic radars and other hardware to learn by taking routes as units first and then use, a user drives a vehicle on a road and parks into a parking space, an auxiliary driving system memorizes the routes, when the vehicle passes the learned routes again, route learning is replayed, the automatic parking solutions can only follow the routes learned by the user for driving, is not provided with parking lot service information, needs to be used by the user in the vehicle, still takes much time, and cannot solve the pain point of the last kilometer of the user. That is to say, the present automatic parking solutions have a low automation degree and low parking efficiency, and cannot effectively and thoroughly solve the key problem that the users spend too much time for parking.

In order to solve the above technical problems, the present disclosure provides a parking method and apparatus, a storage medium, a chip and a vehicle. According to the parking method, in response to determining that a distance between the vehicle and a designated parking lot is less than a preset distance threshold, free parking spaces of the designated parking lot can be obtained in advance, and a recommended target parking space is determined according to position information of each free parking space; and target parking prompt information is generated according to the recommended target parking space, the target parking prompt information is sent to a designated terminal, and in response to receiving a valet parking allowing instruction sent by the designated terminal, the valet parking allowing instruction is forwarded to the target vehicle to control the target vehicle to drive to the recommended target parking space. In this way, a user can be replaced to search for the free parking spaces, the corresponding recommended target parking space can be provided for the user, after the recommended target parking space is determined, a valet parking function can be started in response to receiving the valet parking allowing instruction sent by the designated terminal, and then automatic parking to the recommended target parking space is realized, so that the automation degree of parking can be effectively increased, the efficiency of automatic parking can be increased, and the parking experience of the user can be improved.

The technical solutions of the present disclosure are described in detail below in combination with some examples.

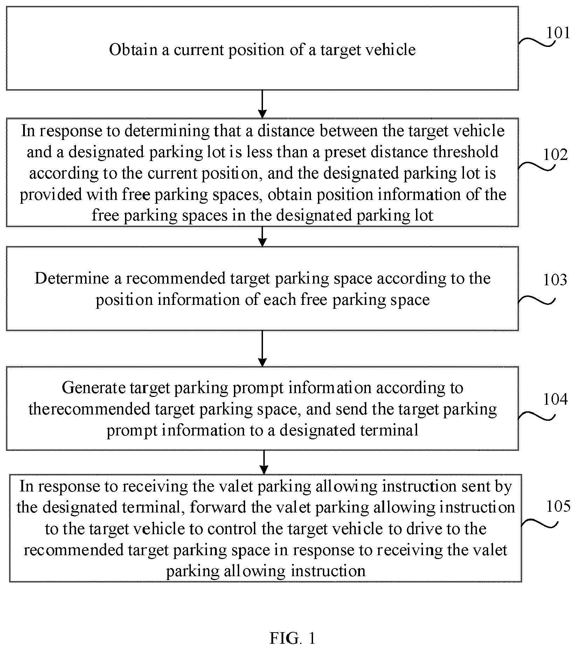

Fig. 1 is a flow diagram of a parking method shown in an example of the present disclosure; and as shown in Fig. 1, the parking method is performed by a target server, and may include:

Step 101, obtaining a current position of a target vehicle.

The target server may be a cloud server, and the current position may be obtained through a vehicle location apparatus.

Step 102, in response to determining that a distance between the target vehicle and a designated parking lot is less than a preset distance threshold according to the current position, and the designated parking lot is provided with free parking spaces, obtaining position information of the free parking spaces in the designated parking lot.

In the step, the position information of the free parking spaces in the designated parking lot may be obtained by accessing a first cloud server connected to a management system of the parking lot, preset electronic device in the designated parking lot may acquire the current free parking spaces in the designated parking lot in real time, and upload relevant data of the free parking spaces (including identifications, positions, free starting time and the like of the free parking spaces) to a background server of the system, then the background server of the system uploads the data to the first cloud server, and the target server may obtain the free parking spaces and the position information of each free parking space from the first cloud server.

It should be noted that in the case that a distance between the target vehicle and a designated parking lot is determined to be less than a preset distance threshold, a request for obtaining a number of the free parking spaces is sent to the first cloud server, and in response to receiving the number of the free parking spaces, and determining that the number of the free parking spaces is greater than zero, a request for obtaining the positions of the free parking spaces is sent to the first cloud server to obtain position information of the free parking spaces in the designated parking lot. In the case that the distance between the target vehicle and the designated parking lot is determined to be greater than or equal to the preset distance threshold, the request for obtaining the number of the free parking spaces is not sent to the first cloud server.

Step 103, determining a recommended target parking space according to the position information of each free parking space.

The position information of the free parking spaces may include floors and areas where the free parking spaces are located, and position coordinates of the free parking spaces in a preset coordinate system of the parking lot, the preset coordinate system of the parking lot may be a two-dimensional coordinate system or a three-dimensional coordinate system with the central position of the parking lot (an exit position or other preset positions of the parking lot) as the origin, and one or more recommended target parking spaces may be included.

In the step, one possible implementation manner is: obtaining preset parking position preference information which includes parking areas nearest to an exit and/or preset preferred parking areas; and determining the recommended target parking space from at least one free parking space of the designated parking lot according to the parking position preference information and position feature information of each free parking space.

For example, in response to determining that parking preference of a user is to park at a position nearest to the exit of the parking lot, a free parking space nearest to the exit of the parking lot may be obtained from at least one free parking space according to position information of each free parking space, and the free parking space nearest to the exit of the parking lot is taken as the recommended target parking space. In response to determining that parking preference of a user is to park in an area A, free parking spaces belonging to the area A may be obtained from at least one free parking space according to position information of each free parking space, and if there are a plurality of free parking spaces in the area A, the recommended target parking space is determined from the plurality of free parking spaces in the area A. When the recommended target parking space is determined from the plurality of free parking spaces in the area A, a parking space that the user has parked in historical time may be obtained, the parking space that the user has parked in the historical time in the plurality of free parking spaces in the area A is taken as the recommended target parking space, or the plurality of free parking spaces in the area A may all be sent to a designated terminal (such as a mobile phone of the user) as recommended parking spaces, the free parking space designated by the user is received through the designated terminal, and the free parking space designated by the user is taken as the recommended target parking space.

Another possible implementation manner is: obtaining historical parking information of a user in the designated parking lot, and the historical parking information including a designated position of each historical parking space and use times of each historical parking space; and determining the recommended target parking space from at least one free parking space according to the use times and the designated position of each historical parking space.

Step 104, generating target parking prompt information according to the recommended target parking space, and sending the target parking prompt information to a designated terminal.

The designated terminal is used for displaying the target parking prompt information, and triggering a valet parking allowing instruction in response to target operation of the user, and the valet parking allowing instruction is used for representing that a valet parking function is allowed to be started.

It should be noted that the target parking prompt information may include identification information and position information of the recommended target parking space, the target operation may be clicking a valet parking start button in a preset application program in the designated terminal, or may be sliding a screen of the designated terminal according to a preset track in an interface of the preset application program to trigger the valet parking allowing instruction.

In response to determining that a plurality of the recommended target parking spaces are exist, target parking prompt information including a corresponding option of each recommended target parking space is generated; and the target parking prompt information may include an option of each recommended target parking space, the user may select the corresponding recommended target parking space by clicking the option, where identification information, position information and advantage information of each recommended target parking space may also be displayed in the target parking prompt information, and the designated terminal may display the identification information, position information, advantage information and an option button of each recommended target parking space, and receive the recommended target parking space designated by the user through the option button.

In this way, the target parking prompt information is sent to the designated terminal to prompt the user that a valet parking function may be selected for parking, the valet parking function can be timely and effectively started, and then the automation level of parking can be effectively increased, and the parking efficiency can be increased.

Step 105, in response to receiving the valet parking allowing instruction sent by the designated terminal, forwarding the valet parking allowing instruction to the target vehicle to control the target vehicle to drive to the recommended target parking space in response to receiving the valet parking allowing instruction.

The valet parking allowing instruction may include the identification and position information of the recommended target parking space.

In the step, the target vehicle may rely on a domain controller, a camera, and millimeter-wave, ultrasonic and laser radars, real-time sensing for roads, parking spaces and obstacles is carried out through sensors, semantic recognition is carried out on image information, an environment is modeled, and control over acceleration and deceleration, corners, obstacle avoidance, meeting, and parking to the recommended target parking space, of the target vehicle, is completed in combination with a movement control system of the target vehicle.

According to the above technical solutions, a user can be replaced to search for the free parking spaces, the corresponding recommended target parking space can be provided for the user, after the recommended target parking space is determined, a valet parking function can be started in response to receiving the valet parking allowing instruction sent by the designated terminal, and then automatic parking to the recommended target parking space is realized, so that the efficiency of automatic parking can be effectively increased, and the parking experience of the user can be improved.

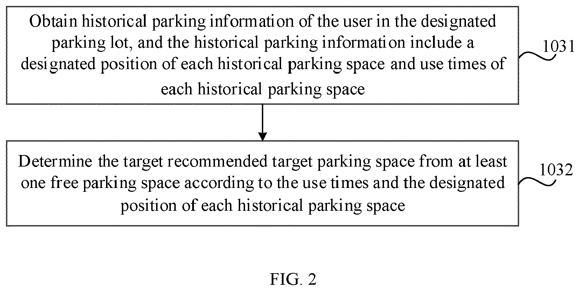

Fig. 2 is a flow diagram of a parking method shown according to the example shown in Fig. 1 of the present disclosure; and determining a recommended target parking space according to position information of each free parking space in the step 103 in Fig. 1 may include:
Step 1031, obtaining historical parking information of the user in the designated parking lot, and the historical parking information including a designated position of each historical parking space and use times of each historical parking space.
Step 1032, determining the recommended target parking space from at least one free parking space according to the use times and the designated position of each historical parking space.

In the step, historical target parking spaces with use times which are greater than a preset times threshold may be determined; in the case that the at least one free parking space includes one historical target parking space, the historical target parking space is taken as the recommended target parking space; and in the case that the at least one free parking space includes a plurality of the historical target parking spaces, the historical target parking space with the highest use times is taken as the recommended target parking space.

In addition, in the case that the at least one free parking space does not include the historical target parking spaces, a free target parking space nearest to the designated position of a designated historical parking space is obtained; and the free target parking space is taken as the recommended target parking space, and the designated historical parking space is the historical target parking space with the highest use times.

It should be noted that, in the case that the at least one free parking space does not include historical target parking spaces with use times which are greater than or equal to the preset times threshold, the historical target parking space with the highest use times (that is, the designated historical parking space) may be determined, a free target parking space nearest to the designated historical parking space is determined, the free target parking space nearest to the designated historical parking space is taken as the recommended target parking space, and there may be one or more recommended target parking spaces.

According to the above technical solutions, the recommended target parking space that is more consistent with parking habits of the user can be determined according to the historical parking data of the user, so that improvement for the user experience is benefited.

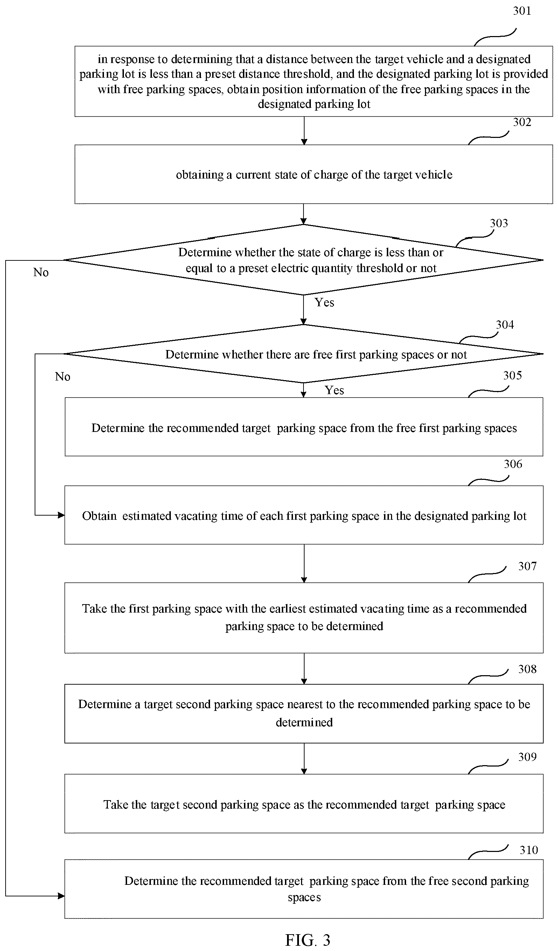

Fig. 3 is a flow diagram of a parking method shown in another example of the present disclosure; and as shown in Fig. 3, the parking method includes:
Step 301, in response to determining that a distance between the target vehicle and a designated parking lot is less than a preset distance threshold, and the designated parking lot is provided with free parking spaces, obtaining position information of the free parking spaces in the designated parking lot.

The free parking spaces include first parking spaces with charging piles and second parking spaces without the charging piles.

It should be noted that in response to determining that a distance between the target vehicle and a designated parking lot is less than a preset distance threshold, a request for obtaining a number of the free parking spaces is sent to a first cloud server, and after the number of the free parking spaces is received, in response to determining that the number of the free parking spaces is greater than zero, a request for obtaining the positions of the free parking spaces is sent to the first cloud server to obtain position information of the free parking spaces in the designated parking lot. In response to determining that the distance between the target vehicle and the designated parking lot is greater than or equal to the preset distance threshold, the request for obtaining the number of the free parking spaces is not sent to the first cloud server.

Step 302, obtaining a current state of charge of the target vehicle.

Step 303, determining whether the state of charge is less than or equal to a preset electric quantity threshold or not.

In the step, in response to determining that the state of charge is less than or equal to the preset electric quantity threshold, step 304 is executed, and in response to determining that the state of charge is greater than the preset electric quantity threshold, step 310 is executed.

Step 304, determining whether there are free first parking spaces or not.

In the step, in response to determining that the free first parking spaces are existent, step 305 is executed, and in response to determining that the free first parking spaces are non-existent, steps 306 to 309 are executed.

Step 305, determining the recommended target parking space from the free first parking spaces.

In the step, one possible implementation manner is: obtaining a historical charging parking space used by the user for charging within a preset historical time period, and in response to determining that the free first parking spaces include the historical charging parking space, taking the historical charging parking space as the recommended target parking space.

Another possible implementation manner is: determining the recommended target parking space from the free first parking spaces according to a preset screening strategy, the preset screening strategy may be taking the first parking space where the charging pile with the shortest historical charging time is located as the recommended target parking space, or may be taking the first parking space nearest to a parking area of the parking lot as the recommended target parking space, or may be taking the first parking space where the charging pile with the highest charging speed is located as the recommended target parking space.

It should be noted that, the historical charging time and the charging speed of the charging pile may be obtained through a second cloud server of the charging pile, and the specific data obtaining process may refer to a data obtaining manner in the related art, which is not limited in the present disclosure.

Step 306, obtaining estimated vacating time of each first parking space in the designated parking lot.

The estimated vacating time is used for representing estimated charging completion time of a designated charging vehicle.

In the step, the estimated charging completion time of each charging pile may be obtained by sending a data request to the second cloud server of the charging pile.

Step 307, taking the first parking space with the earliest estimated vacating time as a recommended parking space to be determined.

Step 308, determining a target second parking space nearest to the recommended parking space to be determined.

In the step, according to a distance between first position representation coordinates of the recommended parking space to be determined and second position representation coordinates of each free second parking space, the target second parking space nearest to the recommended parking space to be determined may be determined from the at least one free second parking space. The position representation coordinates may be the coordinates of the central point of each parking space.

Step 309, taking the target second parking space as the recommended target parking space.

Step 310, determining the recommended target parking space from the free second parking spaces.

In the step, the method for determining the recommended target parking space from the free second parking spaces may refer to the implementation manner shown in the step 103 in Fig. 1, which will not be repeated here in the present disclosure.

According to the above technical solutions, the first parking space with the charging pile can be provided for the vehicle that needs to be charged as the recommended target parking space, and the problem that the user needs to charge during parking can be effectively solved, so that the user experience can be effectively improved.

Optionally, the method may further include:
in response to determining that charging for the designated charging vehicle in the recommended parking space to be determined is completed, sending a charging moving instruction to the target vehicle to enable the target vehicle to drive to the recommended parking space to be determined for charging in response to receiving the charging moving command, and sending position information of the target second parking space to the designated charging vehicle to enable the designated charging vehicle to move to the target second parking space.

In this way, in response to determining that charging for the designated charging vehicle in the recommended parking space to be determined is completed, the target vehicle can be charged in time in a manner of exchanging parking positions with the designated charging vehicle, and meanwhile, the effective parking of the designated charging vehicle can be ensured.

Optionally, the method further includes:
in response to determining that parking of the target vehicle is completed, sending parking completion information to the designated terminal, and the parking completion information including a parking space identification of the parking space and image information within a preset range around the parking space.

The image information may be monitoring images taken by monitoring equipment near the parking space where the target vehicle is located in the designated parking lot, or may be images taken by vehicle-mounted cameras and uploaded by other vehicles.

Optionally, the method further includes:
in response to receiving a vehicle picking instruction including a getting-in position, which is triggered by the designated terminal, forwarding the vehicle picking instruction to the target vehicle to enable the target vehicle to drive out of the designated parking lot to the getting-in position in response to receiving the vehicle picking instruction.

The getting-in position may be a preset position at the exit of the parking lot, or may be the entrance of a building, for example, the entrance of the lobby on the first floor of a building and the entrance of a supermarket, or may be other preset positions.

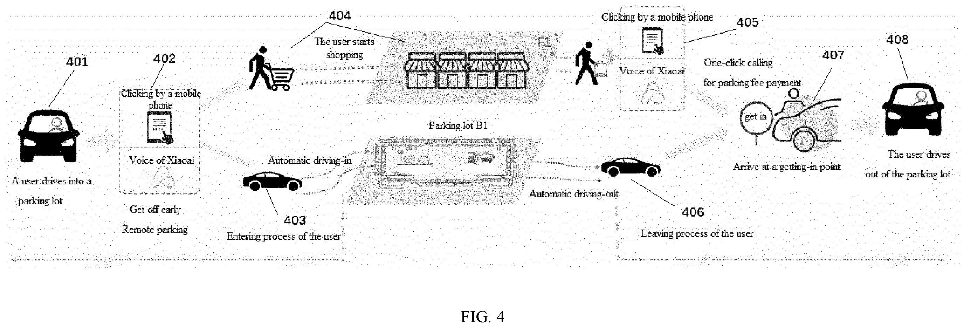

For example, Fig. 4 is a schematic diagram of a parking scene shown in an example of the present disclosure, as shown in Fig. 4, before entering 401 a parking lot B 1, a user triggers a valet parking allowing instruction 402 through a mobile phone (i.e. the designated terminal), and then a vehicle automatically parks 403 into a recommended target parking space, the recommended target parking space may be a first parking space with a charging pile or a second parking space without the charging pile, when the user is ready to leave a mall, after shopping 404 and needs to use the vehicle, the user triggers a vehicle picking instruction through the mobile phone 405 (may be triggering the vehicle picking instruction by voice control or may be triggering by clicking a preset key), the vehicle drives out 406 of the parking lot to a getting-in position 407 designated in advance, and the user completes parking 408 after getting in the vehicle at the getting-in position.

According to the above technical solutions, the reliable recommended target parking space that meets the personalized need of the user can be provided for the user, and the vehicle can be controlled to park into the recommended target parking space through the valet parking function, so that the automation degree of the parking process can be effectively increased, the parking efficiency can be increased, the energy required in the parking process can be effectively reduced, and improvement for the user experience is benefited.

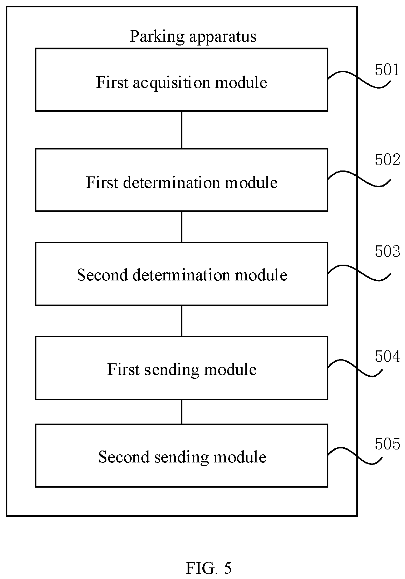

Fig. 5 is a block diagram of a parking apparatus shown in an example of the present disclosure; and as shown in Fig. 5, the parking method is performed by a target server, and may include:
a first obtaining module 501, configured to obtain a current position of a target vehicle;
a first determination module 502, configured to obtain, in response to determining that a distance between the target vehicle and a designated parking lot is less than a preset distance threshold according to the current position, and the designated parking lot is provided with free parking spaces, position information of the free parking spaces in the designated parking lot;
a second determination module 503, configured to determine a recommended target parking space according to position information of each free parking space;
a first sending module 504, configured to generate target parking prompt information according to the recommended target parking space, send the target parking prompt information to a designated terminal which is used for displaying the target parking prompt information, and in response to target operation of a user, trigger a valet parking allowing instruction which is used for representing that a valet parking function is allowed to be started; and
a second sending module 505, configured to forward, in response to receiving the valet parking allowing instruction sent by the designated terminal, the valet parking allowing instruction to the target vehicle to control the target vehicle to drive to the recommended target parking space in response to receiving the valet parking allowing instruction.

According to the above technical solutions, a user can be replaced to search for the free parking spaces, the corresponding recommended target parking space can be provided for the user, after the recommended target parking space is determined, a valet parking function can be started in response to receiving the valet parking allowing instruction sent by the designated terminal, and then automatic parking to the recommended target parking space is realized, so that the efficiency of automatic parking can be effectively increased, and the parking experience of the user can be improved.

Optionally, the second determination module 503 is configured to:
obtain preset parking position preference information which includes parking areas nearest to an exit and/or preset preferred parking areas; and
determine the recommended target parking space from at least one free parking space of the designated parking lot according to the parking position preference information and position feature information of each free parking space.

Optionally, the second determination module 503 is configured to:
obtain historical parking information of the user in the designated parking lot, and the historical parking information including a designated position of each historical parking space and use times of each historical parking space; and
determine the recommended target parking space from at least one free parking space according to the use times and the designated position of each historical parking space.

Optionally, the second determination module 503 is configured to:
determine historical target parking spaces with use times which are greater than a preset times threshold;
in response to determining that the at least one free parking space includes one historical target parking space, take the historical target parking space as the recommended target parking space; and
in response to determining that the at least one free parking space includes a plurality of the historical target parking spaces, take the historical target parking space with the highest use times as the recommended target parking space.

Optionally, the second determination module 503 is configured to:
in response to determining that the at least one free parking space does not include the historical target parking spaces, obtain a free target parking space nearest to the designated position of a designated historical parking space; and take the free target parking space as the recommended target parking space, and the designated historical parking space being the historical target parking space with the highest use times.

Optionally, the first sending module 504 is configured to:
in response to determining that a plurality of the recommended target parking spaces are exist, generate target parking prompt information including a corresponding option of each recommended target parking space; and
the second sending module 505 is configured to:
   in response to receiving a valet parking allowing instruction including the recommended target parking space designated by the user, forward the valet parking allowing instruction to the target vehicle.

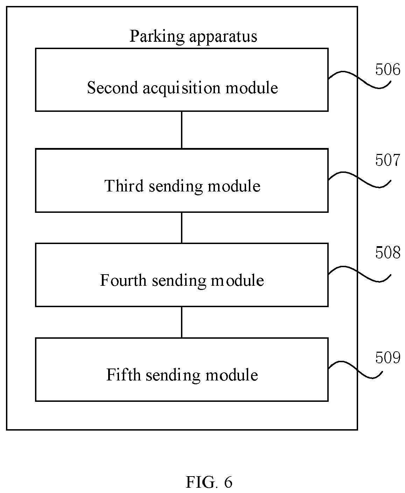

Fig. 6 is a block diagram of a parking apparatus according to the example shown in Fig. 5 of the present disclosure; and as shown in Fig. 6, the free parking spaces include first parking spaces with charging piles and second parking spaces without the charging piles, and the apparatus further includes:
a second obtaining module 506, configured to obtain a current state of charge of the target vehicle; and
the second determination module 503 is configured to:
   in response to determining that the state of charge is less than or equal to a preset electric quantity threshold, and free first parking spaces are determined to exist, determine the recommended target parking space from the free first parking spaces.

Optionally, the second determination module 503 is configured to:
in response to determining that the free first parking spaces are non-existent, obtain estimated vacating time of each first parking space in the designated parking lot, and the estimated vacating time is used for representing estimated charging completion time of a designated charging vehicle;
take the first parking space with the earliest estimated vacating time as a recommended parking space to be determined;
determine a target second parking space nearest to the recommended parking space to be determined; and
take the target second parking space as the recommended target parking space.

Optionally, the apparatus further includes:
a third sending module 507, configured to send, in response to determining that charging for the designated charging vehicle in the recommended parking space to be determined is completed, a charging moving instruction to the target vehicle to enable the target vehicle to drive to the recommended parking space to be determined for charging in response to receiving the charging moving command, and send position information of the target second parking space to the designated charging vehicle to enable the designated charging vehicle to move to the target second parking space.

Optionally, the apparatus further includes:
a fourth sending module 508, configured to send, in response to determining that parking of the target vehicle is completed, parking completion information to the designated terminal, and the parking completion information including a parking space identification of the parking space and image information within a preset range around the parking space.

Optionally, the apparatus further includes:
a fifth sending module 509, configured to forward, in response to receiving a vehicle picking instruction including a getting-in position, which is triggered by the designated terminal, the vehicle picking instruction to the target vehicle to enable the target vehicle to drive out of the designated parking lot to the getting-in position in response to receiving the vehicle picking instruction.

According to the above technical solutions, the reliable recommended target parking space that meets the personalized need of the user can be provided for the user, and the target vehicle can be controlled to park into the recommended target parking space through the valet parking function, so that the automation degree of the parking process can be effectively increased, the parking efficiency can be increased, the energy required in the parking process can be effectively reduced, and improvement for the user experience is benefited.

With regard to the apparatus in the above examples, the specific manners that various modules perform operations have been described in detail in the examples relating to the methods, and details are not described herein.

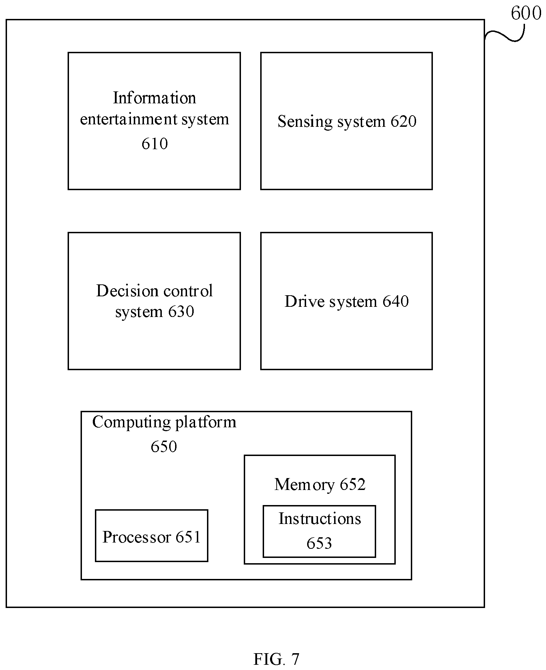

Fig. 7 is a block diagram of a vehicle shown according to an example. For example, the vehicle 600 may be a hybrid vehicle, a non-hybrid vehicle, an electric vehicle, a fuel cell vehicle, or other types of vehicles. The vehicle 600 may be an autonomous driving vehicle, a semi-autonomous driving vehicle, or a non-autonomous driving vehicle.

Referring to Fig. 7, the vehicle 600 may include various subsystems, such as an information entertainment system 610, a sensing system 620, a decision control system 630, a drive system 640, and a computing platform 650. The vehicle 600 may further include more or fewer subsystems, and each subsystem may include a plurality of components. In addition, each subsystem and each component of the vehicle 600 may be interconnected in a wired manner or a wireless manner.

Optionally, the information entertainment system 610 may include a communication system, an entertainment system, a navigation system, etc.

The sensing system 620 may include a plurality of sensors for sensing information about an environment around the vehicle 600. For example, the sensing system 620 may include a global positioning system (the global positioning system may be a GPS, or a Beidou system or other positioning systems), an inertial measurement unit (IMU), a laser radar, a millimeter-wave radar, an ultrasonic radar, and an image pick-up apparatus.

The decision control system 630 may include a computing system, a vehicle control unit, a steering system, an accelerator, and a braking system.

The drive system 640 may include components that provide power movement for the vehicle 600. In one example, the drive system 640 may include an engine, an energy source, a transmission system, and wheels. The engine may be one or a combination of more of an internal combustion engine, an electric motor, and an air compression engine. The engine can convert energy provided by the energy source into mechanical energy.

Part or all functions of the vehicle 600 are controlled by the computing platform 650. The computing platform 650 may include at least one processor 651 and a memory 652, and the processor 651 may execute instructions 653 stored in the memory 652.

The processor 651 may be any conventional processor, such as a commercially available CPU. The processor may further include, for example, a graphic process unit (GPU), a field programmable gate array (FPGA), a system on chip (SOC), an application-specific integrated circuit (ASIC), or a combination thereof.

The memory 652 may be realized by any type of volatile or non-volatile storage equipment or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instructions 653, the memory 652 may further store data, such as road maps, route information, and position, direction, speed and other data of the vehicle. The data stored in the memory 652 may be used by the computing platform 650.

In the examples of the present disclosure, the processor 651 may execute the instruction 653 to complete all or part of the steps of the above parking method.

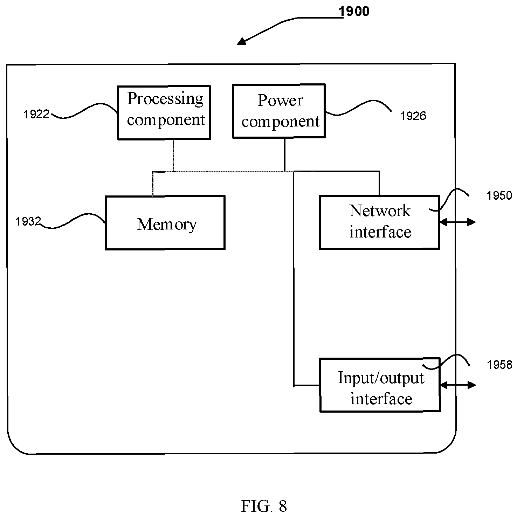

Fig. 8 is a block diagram of an apparatus for parking, which is shown according to an example. For example, the apparatus 1900 may be provided as a server. Referring to Fig. 8, the apparatus 1900 includes a processing component 1922, and further includes one or more processors, and a memory resource represented by the memory 1932 and used for storing instructions capable of being executed by the processing component 1922, such as application programs. The applications stored in the memory 1932 may include one or more modules each corresponding to a set of instructions. In addition, the processing component 1922 is configured to execute the instructions to execute the above parking method.

The apparatus 1900 may further include a power component 1926 configured to execute power supply management on the apparatus 1900, a wired or wireless network interface 1950 configured to connect the apparatus 1900 to a network, and an input/output interface 1958. The apparatus 1900 may operate an operating system stored in the memory 1932, such as Windows Server^{™}, Mac OS X^{™}, Unix^{™}, Linux^{™}, FreeBSD^{™}, or similar.

In another exemplary example, a computer program product is further provided, which includes a computer program capable of being executed by a programmable apparatus, and the computer program is provided with a code part for executing the above parking method when the computer program is executed by the programmable apparatus.

It should be understood that the present disclosure is not limited to the precise structure described above and shown in the drawings, and various modifications and changes can be made without departing from its scope. The scope of the present disclosure is only limited by the appended claims.

## Claims

1. A parking method, performed by target server, and comprising:
obtaining (101) a current position of a target vehicle;
in response to determining that a distance between the target vehicle and a designated parking lot is less than a preset distance threshold according to the current position, and the designated parking lot is provided with free parking spaces, obtaining (102; 301) position information of the free parking spaces in the designated parking lot;
determining(103) a recommended target parking space according to the position information of each free parking space;
generating (104) target parking prompt information according to the recommended target parking space, sending the target parking prompt information to a designated terminal which is used for displaying the target parking prompt information, and in response to target operation of a user, triggering a valet parking allowing instruction which is used for representing that a valet parking function is allowed to be started; and
in response to receiving the valet parking allowing instruction sent by the designated terminal, forwarding (105) the valet parking allowing instruction to the target vehicle to control the target vehicle to drive to the recommended target parking space in response to receiving the valet parking allowing instruction.

2. The method according to claim 1, wherein determining (103) a recommended target parking space according to the position information of each free parking space comprises:
obtaining preset parking position preference information which comprises parking areas nearest to an exit and/or preset preferred parking areas; and
determining the recommended target parking space from at least one free parking space of the designated parking lot according to the parking position preference information and position feature information of each free parking space.

3. The method according to claim 1 or 2, wherein determining (103) a recommended target parking space according to the position information of each free parking space comprises:
obtaining (1031) historical parking information of the user in the designated parking lot, and the historical parking information comprising a designated position of each historical parking space and use times of each historical parking space; and
determining (1032) the recommended target parking space from at least one free parking space according to the use times and the designated position of each historical parking space.

4. The method according to claim 3, wherein determining (1032) the recommended target parking space from at least one free parking space according to the use times and the designated position of each historical parking space comprises:
determining historical target parking spaces with use times which are greater than a preset times threshold;
in response to determining that the at least one free parking space comprises one historical target parking space, taking the historical target parking space as the recommended target parking space; and
in response to determining that the at least one free parking space comprises a plurality of the historical target parking spaces, taking the historical target parking space with a highest use time as the recommended target parking space.

5. The method according to claim 4, wherein determining the recommended target parking space from at least one free parking space according to the use times and the designated position of each historical parking space comprises:
in response to determining that the at least one free parking space does not comprise the historical target parking spaces, obtaining a free target parking space nearest to the designated position of a designated historical parking space; and
taking the free target parking space as the recommended target parking space, and the designated historical parking space being the historical target parking space with the highest use times.

6. The method according to any one of claims 1 to 5, wherein generating (104) the target parking prompt information according to the recommended target parking space comprises:
in response to determining that a plurality of the recommended target parking spaces are existent, generating target parking prompt information comprising a corresponding option of each recommended target parking space; and
in response to receiving a valet parking allowing instruction sent by the designated terminal, forwarding (105) the valet parking allowing instruction to the target vehicle comprises:
in response to receiving a valet parking allowing instruction comprising the recommended target parking space designated by the user, forwarding the valet parking allowing instruction to the target vehicle.

7. The method according to any one of claims 1 to 6, wherein the free parking spaces comprise first parking spaces with charging piles and second parking spaces without charging piles, and before determining (103) a recommended target parking space according to position information of each free parking space, the method further comprises:
obtaining (302) a current state of charge of the target vehicle; and
determining (103) a recommended target parking space according to the position information of each free parking space comprises:
in response to determining that the state of charge is less than or equal to a preset electric quantity threshold, and free first parking spaces are existent, determining (305) the recommended target parking space from the free first parking spaces.

8. The method according to claim 7, wherein determining (103) a recommended target parking space according to the position information of each free parking space comprises:
in response to determining that the free first parking spaces are non-existent, obtaining (306) estimated vacating time of each first parking space in the designated parking lot, and the estimated vacating time being used for representing estimated charging completion time of a designated charging vehicle;
taking (307) the first parking space with the earliest estimated vacating time as a recommended parking space to be determined;
determining (308) a target second parking space nearest to the recommended parking space to be determined; and
taking (309) the target second parking space as the recommended target parking space.

9. The method according to claim 8, further comprising:
in response to determining that charging for the designated charging vehicle in the recommended parking space to be determined is completed, sending a charging moving instruction to the target vehicle to enable the target vehicle to drive to the recommended parking space to be determined for charging in response to receiving the charging moving command, and sending position information of the target second parking space to the designated charging vehicle to enable the designated charging vehicle to move to the target second parking space.

10. The method according to any one of claims 1 to 9, further comprising:
in response to determining that parking of the target vehicle is completed, sending parking completion information to the designated terminal, and the parking completion information comprising a parking space identification of the parking space and image information within a preset range around the parking space.

11. The method according to any one of claims 1 to 10, further comprising:
in response to receiving a vehicle picking instruction comprising a getting-in position, which is triggered by the designated terminal, forwarding the vehicle picking instruction to the target vehicle to enable the target vehicle to drive out of the designated parking lot to the getting-in position in response to receiving the vehicle picking instruction.

12. A vehicle (600), comprising:
a processor (651); and
a memory (652) for storing processor executable instruction;
wherein the processor (651) is configured to:.
obtain a current position of a target vehicle;
in response to determining that a distance between the target vehicle and a designated parking lot is less than a preset distance threshold according to the current position, and the designated parking lot is provided with free parking spaces, obtain position information of the free parking spaces in the designated parking lot;
determine a recommended target parking space according to the position information of each free parking space;
generate target parking prompt information according to the recommended target parking space, send the target parking prompt information to a designated terminal which is used for displaying the target parking prompt information, and in response to target operation of a user, triggering a valet parking allowing instruction which is used for representing that a valet parking function is allowed to be started; and
in response to receiving the valet parking allowing instruction sent by the designated terminal, forward the valet parking allowing instruction to the target vehicle to control the target vehicle to drive to the recommended target parking space in response to receiving the valet parking allowing instruction.

13. The vehicle according to claim 12, wherein the processor (651) is further configured to: execute the method according to any one of claims 2 to 11.

14. A non-transitory computer-readable storage medium in which computer program instructions are stored, wherein the program instructions, when executed by the processor implement:
obtaining a current position of a target vehicle;
in response to determining that a distance between the target vehicle and a designated parking lot is less than a preset distance threshold according to the current position, and the designated parking lot is provided with free parking spaces, obtaining position information of the free parking spaces in the designated parking lot;
determining a recommended target parking space according to the position information of each free parking space;
generating target parking prompt information according to the recommended target parking space, sending the target parking prompt information to a designated terminal which is used for displaying the target parking prompt information, and in response to target operation of a user, triggering a valet parking allowing instruction which is used for representing that a valet parking function is allowed to be started; and
in response to receiving the valet parking allowing instruction sent by the designated terminal, forwarding the valet parking allowing instruction to the target vehicle to control the target vehicle to drive to the recommended target parking space in response to receiving the valet parking allowing instruction.

15. A chip, comprising a processor and an interface, wherein the processor is used for reading the instructions to execute the method according to any one of claims 1 to 11.
